# FASCICULE DE BREVET EUROPEEN

(11) **EP 0 600 761 B1**
(45) Date de publication et mention de la délivrance du brevet: **08.09.1999**
(21) Numéro de dépôt: 93402791.3
(22) Date de dépôt: 17.11.1993
(51) Int. Cl.: A47J 31/40, B65D 81/00

(54) **Procédé et dispositif de réalisation de doses de boisson et notamment de café**
Verfahren und Vorrichtung zur Zubereitung von Getränkeportionen, insbesondere von Kaffee
Method and device for preparing and dispensing beverages, particularly coffee

(30) Priorité: 17.11.1992 FR 9213778
(43) Date de publication de la demande: 08.06.1994
(73) Titulaire: SOCIETE AGRICOLE DE PRODUITS DE BASE, 95130 Franconville (FR)
(72) Inventeur: Freychet, Alain, F-78400 Chatou (FR); Bassereau, Jean-François, F-75015 Paris (FR)
(74) Mandataire: Bernasconi, Jean

(56) Documents cités:
- EP-A- 0 125 215
- EP-A- 0 211 511
- EP-A- 0 223 886
- WO-A-85/05092
- BE-A- 716 869
- BE-A- 863 866
- FR-A- 2 583 306
- FR-A- 2 600 875
- GB-A- 964 542
- GB-A- 2 123 685
- US-A- 2 890 643
- US-A- 5 147 071

## Description

La présente invention a trait à un procédé et un dispositif pour réaliser, de façon automatique, des doses de café à partir de café soluble en poudre. L'invention peut également s'appliquer à d'autres boissons préparées à partir de poudres solubles présentant des propriétés analogues à celles du café soluble.

On a déjà prévu des récipients spéciaux permettant l'infusion de doses de boisson par extraction à partir d'un matériau tel que du café moulu ou des feuilles de thé. De tels dispositifs se présentant sous forme de barquette ou de sachet, décrits, par exemple dans EP-A-0 211 511 ou GB-A-0 123 685, se caractérisent par un fond recevant un élément filtrant au-dessus duquel est disposée la matière à extraire, des moyens étant prévus pour l'amenée de l'eau à la partie supérieure du récipient et l'écoulement de la boisson extraite à la partie inférieure du récipient. Dans GB-A-2 123 685 l'arrivée de l'eau à la partie supérieure s'effectue par l'intermédiaire d'un embout bouchable, en forme de col et dans lequel vient se disposer, de façon étanche, un conduit d'amenée d'eau qui est ensuite utilisée pour amener de l'air comprimé et chasser le liquide contenu dans le sachet à travers l'ouverture inférieure du sachet.

On connait différents dispositifs permettant de réaliser une dose de café froid ou chaud à partir de café en poudre que l'on mélange à de l'eau. Dans les machines de ce genre, par exemple dans des distributeurs automatiques de boissons, on achemine séparément vers une chambre de préparation, par exemple un gobelet, une dose de boisson en poudre soluble et une dose d'eau froide ou chaude et l'on réalise le mélange, soit à l'aide d'un organe de battage, soit simplement par un mouvement imprimé à l'eau.

De tels dispositifs sont cependant limités à la délivrance de la boisson en doses individuelles de volume relativement faible, ce qui provoque une attente considérable lorsque l'on doit préparer un grand nombre de doses.

On peut certes imaginer, si l'on souhaite préparer des volumes plus importants englobant un certain nombre de doses, d'augmenter les quantités de poudre et d'eau mais, malheureusement, la difficulté de réaliser une bonne dissolution augmente rapidement avec le volume de la poudre.

Ainsi FR-A-2 583 306 décrit l'utilisation de poches souples étanches dans lesquelles on réalise un concentré de café en remplissant la poche avec de l'eau et du café soluble dans des conditions permettant une dissolution sous vide. Une telle solution demande une installation complexe susceptible de travailler sous vide ainsi qu'une chaîne de distribution spéciale des poches souples de concentré de café, la souplesse des poches favorisant également une homogénéisation du concentré par effet mécanique.

La présente invention se propose de remédier à ces inconvénients et de fournir un procédé et un dispositif de préparation de doses de café ou autres boissons à partir de poudres solubles, permettant de réaliser très rapidement soit un grand nombre de doses individuelles de boissons, soit les volumes de boissons correspondant à une pluralité de doses, et ceci d'une façon particulièrement simple et sans utiliser de moyens mécaniques susceptibles de tomber en panne ou de demander un entretien fastidieux.

L'invention a pour objet un procédé de préparation automatique de doses ou de pluralité de doses d'une boisson telle que, notamment, le café, à partir de poudre soluble, dans lequel on réalise, dans une enceinte, un concentré de boisson par dissolution de quantités déterminées de poudre et d'eau, puis l'on procède à une dilution d'une partie ou de la totalité du concentré dans de l'eau froide ou chaude pour réaliser une dose ou une pluralité de doses de boisson, caractérisé en ce que l'on dispose une quantité déterminée de poudre dans ladite enceinte in situ dans un dispositif de délivrance desdites doses de boisson, et que l'on amène une quantité déterminée d'eau dans ladite enceinte au-dessus de la surface du volume de poudre dans ladite enceinte, à un débit suffisant pour qu'un volume d'eau s'accumule sur la surface de la poudre, pour dissoudre ladite poudre dans ladite enceinte maintenue à pression ambiante, en autorisant l'évacuation de l'air pour former, dans ladite enceinte, ledit concentré liquide de boisson.

L'obtention in situ d'un volume important de concentré liquide de café permet d'utiliser, pour la deuxième étape du procédé selon l'invention, des moyens déjà connus de préparation de doses de boissons à partir de concentrés, par exemple dans le domaine des jus de fruits.

La dissolution automatique de volumes importants de café en poudre soluble dans des volumes relativement réduits de liquide pour la réalisation d'un concentré est particulièrement difficile à réaliser. En conséquence, selon un mode de mise en oeuvre particulièrement préféré du procédé selon l'invention, on réalise du concentré en dispersant de l'eau, d'une façon douce et homogène, sur la totalité de la surface supérieure d'un volume, de préférence horizontalement étalé, de poudre soluble. On constate, que dans ces conditions, on obtient une dissolution pratiquement parfaite de la poudre de café sans formation de résidu insoluble notable. Cette aspersion d'eau, à la surface de la poudre, peut être effectuée à l'aide de buses de pulvérisation judicieusement réparties au-dessus du volume de café en poudre, mais on préfère la réaliser par arrosage modéré par de l'eau tombant naturellement à partir d'une pluralité de trous dans une paroi située au-dessus de la masse de poudre, ou de préférence à partir d'une paroi poreuse située au-dessus de la masse de poudre.

Dans un autre mode de mise en oeuvre, dans lequel la masse de poudre présente une hauteur verticale importante pour une surface plus faible, on peut déverser directement, mais doucement, de l'eau sur la masse de café de façon à former une masse supérieure liquide qui descend progressivement en dissolvant sur son passage les couches successives de poudre rencontrées tandis que l'on complète au fur et à mesure la quantité d'eau.

Dans le premier mode de mise en oeuvre de l'invention, la poudre de café est de préférence conditionnée sous forme de barquettes horizontales.

Dans le deuxième mode de mise en oeuvre de l'invention, le café peut être conditionné, dans des sachets relativement allongés.

Il s'avère que le concentré de café réalisé, non seulement se prête ensuite facilement à une dissolution pour réaliser la boisson, mais encore se conserve sans s'altérer pendant une durée de plusieurs jours, voire de plusieurs dizaines de jours.

Dans un mode de mise en oeuvre particulièrement préféré de l'invention, on procède à la dilution de la quantité souhaitée de concentré de boisson dans un liquide chaud ou froid, par exemple suivant que l'on désire préparer du café chaud ou du café froid, par aspiration par effet Venturi, par exemple conformément au brevet européen EP-A-0 179 113.

On peut ainsi préparer rapidement un grand nombre de doses individuelles de café, ou des volumes importants correspondant, par exemple, à une pluralité de doses, sans utiliser, à aucun stade du procédé selon l'invention, de dispositifs mécaniques, de sorte que l'on supprime pratiquement tout risque de panne et que l'on réduit l'entretien à sa plus simple expression.

L'invention a également pour objet un dispositif pour la mise en oeuvre du procédé selon l'invention.

Dans une première forme de réalisation, lesdits premiers moyens comportent une enceinte, de surface relativement importante, contenant ou recevant la boisson en poudre, et des moyens d'aspersion, de pulvérisation, ou d'humidification homogène amenant de façon homogène et douce, du liquide sur la totalité de la surface supérieure de l'enceinte.

Dans une forme de réalisation particulièrement préférée de l'invention, cette enceinte est constituée d'un récipient en forme de barquette dans lequel le café en poudre est conditionné, le dispositif selon l'invention présentant des moyens pour amener l'eau sur la surface du café contenu dans la barquette. De préférence, la barquette est refermée, à sa face supérieure, par un double opercule, présentant une nappe inférieure poreuse et une nappe supérieure, par exemple plastique ou métallique, étanche et le dispositif comporte des moyens tels que, par exemple une canule, agencés pour pénétrer dans un espace situé entre les deux nappes du double opercule et distribuer de l'eau de façon homogène dans cet espace, l'eau s'écoulant ensuite régulièrement vers le bas à travers la nappe poreuse pour humidifier et dissoudre progressivement le café en poudre. De façon avantageuse, des moyens de perforation sont prévus pour réaliser un ou plusieurs passages d'échappement de l'air.

Dans une variante, la barquette présente un opercule simple de conservation pelliculable ou déchirable et le dispositif présente, à demeure, une nappe sensiblement horizontale poreuse à travers laquelle l'eau amenée en quantité convenable est uniformément répartie sur la surface de la barquette.

Dans une autre variante, cette nappe est remplacée par d'autres moyens de distribution d'eau, par exemple une pluralité de perforations homogènes s'étendant sur toute la surface au-dessus de la barquette ou encore des moyens de pulvérisation douce de la surface.

Dans une autre variante moins préférée, le café peut ne pas être contenu dans une barquette, mais se trouve déversé dans une enceinte par exemple un récipient en forme de barquette présenté par le dispositif, avec cependant, l'inconvénient de nécessiter de temps en temps un nettoyage de cette enceinte.

Le prélèvement du concentré de boisson dans la barquette s'effectue de préférence par la partie inférieure de la barquette, par exemple par pénétration d'une aiguille d'évacuation, par exemple dans un puits de collecte situé à la partie inférieure de la barquette.

Dans une autre forme de réalisation de l'invention, par exemple dans le cas de café en poudre contenu dans un sachet étanche plus haut que large, on peut, soit amener de l'eau conformément aux formes de réalisation qui viennent d'être décrites, soit verser de l'eau directement sur la surface de la masse de café en poudre, par exemple à l'intérieur même du sachet convenablement ouvert, par exemple à l'aide d'une canalisation d'amenée d'eau. De préférence, on amène, par exemple, par pulvérisation, de l'eau au sommet du sachet à un débit tel que l'on forme une masse supérieure liquide qui descend progressivement en dissolvant les couches successives de poudre de café rencontrées tandis que l'on complète la quantité d'eau au fur et à mesure.

Le sachet de café peut avantageusement, dans ce cas, comporter, vers sa partie supérieure, une capsule ou autre pièce analogue en matière plastique qui peut facilement être percée pour le passage d'un organe de distribution d'eau à la partie supérieure du sachet, tel que, par exemple, une buse de pulvérisation.

Cette capsule peut avantageusement comporter une partie généralement cylindrique de faible hauteur, une embase, reliée périphériquement à l'une des bases de la partie cylindrique pour former une zone de fixation, par exemple par collage, sur le sachet de café à sa partie supérieure, et un opercule d'étanchéité facilement ouvrable lorsque le sachet est posé dans la machine à réaliser le concentré de café, pour le passage de la tête de pulvérisation. En outre, cette capsule peut avantageusement comporter des moyens de déchirement tels que par exemple une ou plusieurs pointes s'étendant au-delà de ladite base pour perforer et déchirer partiellement le sachet de café lorsque l'on applique la capsule contre la paroi du sachet de café et que l'on fixe la capsule contre cette paroi, par exemple par collage.

Lesdits moyens de dilution du concentré de café peuvent être des moyens quelconques tels que ceux utilisés dans les machines de distribution de boissons à partir de concentré, par exemple de concentré de jus de fruits.

On préfère cependant particulièrement que lesdits moyens comportent une chambre d'aspiration par effet de Venturi reliée à la source de liquide, par exemple à un réservoir d'eau muni de moyens de chauffage de l'eau, une canalisation d'aspiration reliant le concentré de café, par exemple dans sa barquette, à ladite chambre d'aspiration, laquelle débouche sur une canalisation de distribution. De préférence, un clapet anti-retour est situé sur la canalisation d'aspiration.

Dans une forme de réalisation avantageuse, le dispositif peut ainsi comporter une source d'eau, par exemple une source d'eau chaude, une canalisation de prélèvement de l'eau chaude aboutissant à ladite chambre ou tuyère d'aspiration, éventuellement une dérivation pour une distribution directe d'eau chaude à destination à d'autres applications, ladite canalisation d'aspiration débouchant dans l'enceinte contenant le concentré liquide, une source de liquide destiné à être amené dans ladite enceinte pour la dissolution de la poudre et une canalisation entre ladite source et ladite enceinte. De préférence, la source de liquide est unique et, dans ce cas, une canalisation de dissolution part de la source et se dirige vers la partie supérieure de l'enceinte.

Le dispositif selon l'invention peut être agencé de façon particulièrement compacte, l'enceinte contenant le concentré, par exemple, la barquette, étant de préférence située à la partie supérieure du dispositif de façon que la canalisation d'aspiration soit sensiblement verticale.

Dans le cas où l'on réalise le concentré à l'intérieur même d'un sachet de café de hauteur importante par rapport à sa surface, et où l'on a prévu de disposer à la partie supérieure du sachet, la capsule susmentionnée, cette capsule peut avantageusement être utilisée non seulement pour le passage d'un moyen d'amenée d'eau pour réaliser le concentré de café, mais également pour le passage d'un tube plongeur dont l'extrémité inférieure se dirige vers, et s'arrête à une certaine distance du fond du sachet et dont la partie supérieure est reliée ou est reliable aux moyens d'aspiration tels que par exemple, un dispositif de mélange du type Venturi.

A cet effet, le dispositif qui assure la dilution du concentré pour la préparation des doses, peut comporter un tel tube plongeur, de préférence amovible, que l'on introduit dans le paquet de café, avant ou après la formation du concentré, par exemple à travers le passage prévu dans la capsule, ou un deuxième passage prévu dans la capsule et séparé d'un premier passage à travers lequel peut passer la buse de pulvérisation assurant la dissolution de la poudre de café. Cependant, dans une autre réalisation, le tube plongeur, réalisé alors de préférence en un matériau peu coûteux et jetable, tel que du plastique de qualité alimentaire, peut faire partie intégrante de la capsule qui comporte, alors, d'une part, le passage permettant l'introduction de la buse de pulvérisation d'eau, et d'autre part, du côté interne du sachet, le tube plongeur qui s'étend dans la poudre de café jusqu'au voisinage du fond, et, du côté externe, un raccord permettant un raccordement facile à une tubulure de la machine à café conduisant vers l'organe déprimogène ou Venturi assurant le mélange du concentré et de l'eau pour la formation des doses.

Le réglage du dosage du café peut s'effectuer avantageusement en calibrant le diamètre d'un trou d'aspiration du café concentré. Ce diamètre peut être matérialisé par une pastille percée se trouvant en un endroit quelconque entre le point d'aspiration du café concentré et la chambre du Venturi.

A titre d'exemple, l'invention permet de réaliser 2,2. litres de concentré en 3O secondes à partir duquel on peut réaliser, à l'aide d'un élément de chauffage électrique de trois kW, un litre de café par minute à une température de 68 à 73°C et ceci sans utiliser aucun élément moteur autre que de simples électrovannes.

D'autres avantages et caractéristiques de l'invention apparaîtront à la lecture de la description suivante, faite à titre d'exemple non limitatif et se référant aux dessins annexés dans lequel :
la figure 1 représente une vue schématique générale d'un dispositif selon l'invention ;
la figure 2 représente une vue en coupe d'une barquette de poudre de café soluble selon l'invention ;
la figure 3 représente une vue analogue à la figure 2 pour une variante de l'invention ;
la figure 4 représente une vue schématique de l'enceinte pour une autre réalisation de l'invention.
Les figures 5 et 6 représentent une vue de dessous et une vue de profil d'une capsule d'un sachet de café;

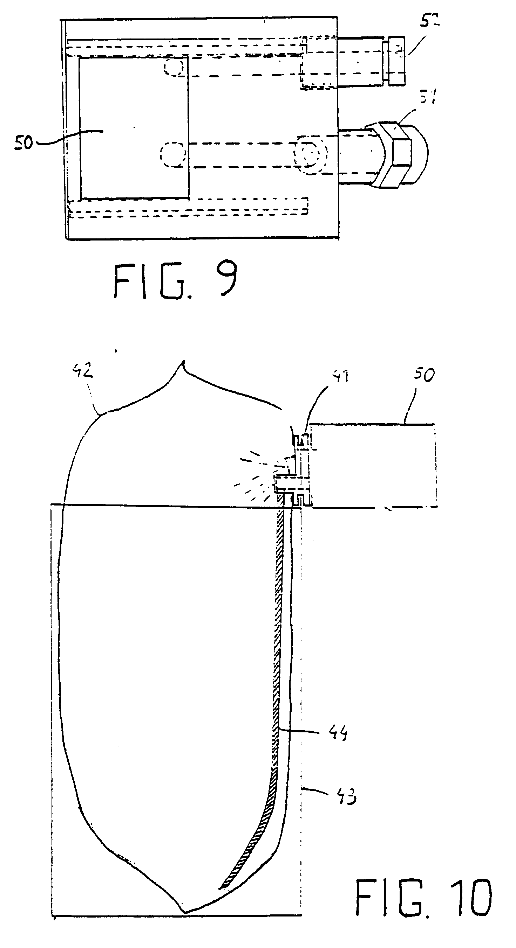

Les figures 7 à 9 représente des vues de cette capsule en position de fonctionnement sur une tête de dispositif de réalisation des doses de café.

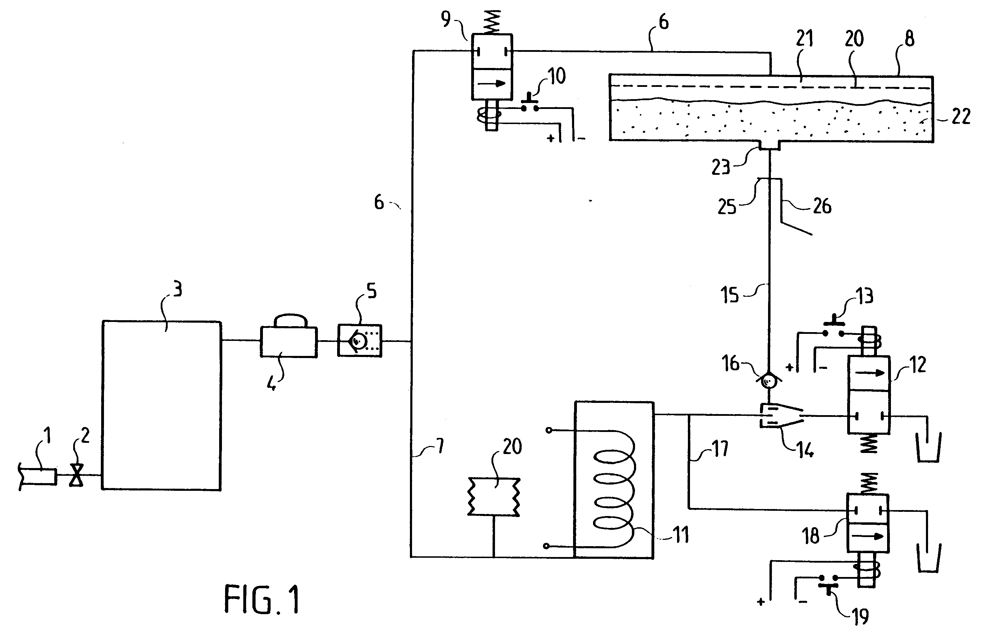

La figure 1O représente une vue schématique du sachet de café dans une telle machine.

La machine à café selon l'invention est alimentée par le réseau d'eau potable 1. Cette machine comporte, au-delà d'une vanne 2, un dispositif 3 de filtration et de purification de l'eau à bae de charbon actif.

A la sortie de ce dispositif de filtration 3, le conduit d'alimentation d'eau comporte un détendeur 4 qui permet de fixer et de réguler la pression d'utilisation à l'intérieur de la machine, par exemple autour de 1,4 bars. Un clapet anti-retour 5 permet d'isoler le détendeur et l'appareil de purification du reste de la machine.

En aval de ce clapet 5, la canalisation d'alimentation d'eau se divise en deux branches 6 et 7. La branche 6 forme un premier conduit qui relie l'alimentation en eau à une enceinte 8 qui contient la poudre de café soluble. Une électrovanne 9 normalement fermée est disposée sur ce premier conduit 6 et peut être ouverte par l'actionnement manuel d'un bouton poussoir 1O.

La seconde branche 7 de la canalisation forme un second conduit qui, dans l'exemple représenté, traverse une chaudière 11 pour aboutir à un organe 12 de soutirage de la boisson, cet organe 12 étant constitué par une électrovanne normalement fermée, actionnée manuellement à l'ouverture par un bouton poussoir 13.

Ce second conduit 7, entre la chaudière 11 et l'électrovanne 12, et à proximité de cette électrovanne 12, comporte un dispositif d'aspiration 14, par exemple une tuyère Venturi, permettant d'engendrer dans un troisième conduit 15, une dépression. Ce troisième conduit 15 est issu de l'enceinte 8. Le conduit 15 possède un clapet anti-retour 16 interdisant la circulation de l'eau du conduit 7 vers le conduit 15.

En amont du Venturi 14, le conduit 7 possède une dérivation 17 qui est équipée également d'un organe de soutirage 18,à avoir une électrovanne normalement fermée et commandée à l'ouverture par un bouton poussoir 19, permettant de soutirer uniquement de l'eau chaude.

Sur le second conduit 7, on a représenté une capacité d'expansion 2O qui permet, lors du chauffage de l'eau de la chaudière 11, de limiter la pression qui règnerait dans ce conduit à environ 3 bars. Le clapet unidirectionnel 5 préserve le détendeur 4 de cette surpression.

L'enceinte 8 de préparation de concentré de café présente une forme parallélépipédique dont la plus grande base est horizontale. L'enceinte 8 est divisée en deux parties ou volumes par une nappe horizontale 2O dont le rôle sera expliqué ci-après. Le premier volume 21 situé au-dessus de la nappe 2O reçoit, à sa partie supérieure, le débouché de la canalisation d'amenée d'eau 6. Le volume inférieur 22 formant la deuxième partie de l'enceinte est rempli, sur la majeure partie de sa hauteur, d'une couche de café soluble en poudre. Un petit puits de recueil 23 permet le débouché, dans l'enceinte, de la canalisation 15.

La nappe ou paroi horizonzale 20 est réalisée en un matériau perméable poreux ou perforé dans la fonction est de laisser passer régulièrement et de façon homogène l'eau qui provient de la canalisation 6 dans le volume 21 pour que cette eau se déverse doucement et de façon homogène vers le bas, sur la couche de café en poudre dans le volume 22 pour assurer une humidification homogène de la couche par le haut.

Cette nappe peut être réalisée en tous matériaux permettant un déversement régulier et homogène de l'eau. Elle peut être, par exemple, réalisée dans des couches fibreuses, par exemple en fibres minérales ou organiques. Elle peut également être constituée d'une nappe textile perméable ou poreuse en un tissu tissé ou non tissé, ou encore en un matériau métallique, par exemple en fibres métalliques ou en tissu métallique, ou encore la nappe peut consister en une membrane poreuse d'un type usuel ou en une couche poreuse d'un matériau fritté. La nappe 2O peut également être constituée d'une tôle ou d'une paroi métallique ou non métallique munie d'une pluralité de fines perforations permettant à l'eau de tomber en gouttes sur la couche supérieure de café soluble.

Le fonctionnement est le suivant :

En actionnant le bouton de commande manuel 1O, on ouvre l'électrovanne 9 de sorte d'une quantité déterminée d'eau en provenance du filtre 3 est amenée par le conduit 6 vers l'enceinte 8. La quantité d'eau est ajustée, par exemple, au moyen d'une temporisation de l'électrovanne 9. L'eau qui est admise dans l'enceinte 8 se répartit dans le volume supérieur 21 au-dessus de la nappe poreuse 2O et commence à se répandre uniformément vers le bas à travers la nappe pour imprégner la couche de poudre de café qui se trouve progressivement solubilisée, et lorsque la quantité prédéterminée d'eau a été amenée dans l'enceinte et a traversé la nappe 2, on constate que la totalité de la poudre de café dans le volume 22 a été dissoute et le volume 22 se trouve rempli d'un concentré de café. Les proportions de café et d'eau sont de préférence de 1/1,2 en volume.

Un ou plusieurs passages d'évacuation d'air (non représentés) sont prévus à la partie supérieure de l'enceinte 8 afin de laisser l'air s'échapper au fur et à mesure que l'eau arrive et dissout le café en poudre.

Une fois que le café en poudre a été solubilisé et forme le concentré, on peut soutirer les quantités de café voulues. Pour cela on appuie sur le bouton-poussoir 13, ce qui amène un débit d'eau chaude en provenance de la chaudière 11 à travers le Venturi 14 et provoque une dépression dans la canalisation verticale 15. Cette dépression aspire du concentré dans l'enceinte 8, lequel concentré se mélange, à l'intérieur du Venturi, à l'eau en provenance de la chaudière dans une proportion de 1/10 pour former le café prêt à être consommé, qui va se déverser dans un gobelet.

En temporisant convenablement l'électrovanne 12, on peut obtenir, au choix, des tasses de café ou des quantités importantes de café dans des pots à café.

La machine selon l'invention peut être conçue de façon compacte, en étant disposée par exemple à l'intérieur d'un capotage en prévoyant l'enceinte 8 à la partie supérieure, les autres éléments étant agencés de façon compacte à un niveau inférieur.

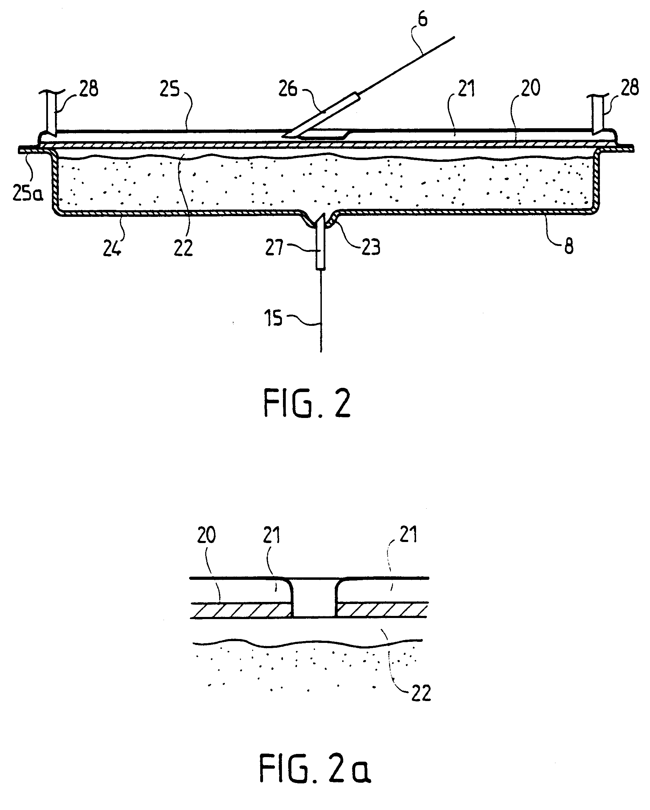

On se réfère maintenant à la figure 2.

Dans une forme de réalisation particulièrement avantageuse de l'invention, l'enceinte 8 est réalisée par une barquette 9 par exemple en matière plastique thermoformée 24. Cette barquette parallélépipédique présente un rebord supérieur périphérique 25 sur lequel est tendue et collée la nappe poreuse 2O. Au-dessus de la nappe poreuse 2O, on a disposé une paroi semi-rigide 25 étanche, par exemple en matière plastique ou en feuille métallique ou en matériau composite usuel pour la formation des opercules alimentaires. Cette paroi 25 présente la forme d'une barquette inversée peu profonde de façon à déterminer entre elle et la nappe 2O, le volume supérieur 21.

Le café en poudre est ainsi conditionné par le fabricant qui livre les barquettes remplies de poudre aux exploitants de machines selon l'invention.

La canalisation 6 se poursuit par une canule biseautée de perforation 26 que l'on fait pénétrer à traver la paroi supérieure 25 de façon à amener l'eau de la canalisation 6 à l'intérieur du volume 21. De même, le puits 23 à la partie inférieure de la barquette, peut être perforé par une canule biseautée 27 pénétrant dans le puits 23 pour établir la communication entre l'intérieur de la barquette et la canalisation 15. En outre, cette canalisation détruit la barquette qui ne pourra plus être réutilisée. L'évacuation de l'air peut s'effectuer par l'intermédiaire d'une ou plusieurs canules verticales 28, qui pénètrent légèrement dans la chambre 21 à travers la paroi supérieure 25. Si l'on estime que l'évacuation de l'air ne se fait pas suffisamment bien à travers la nappe poreuse 2O, on peut évacuer l'air du volume inférieure 22 par un évent aboutissant dans le volume. Ceci peut être réalisé, par exemple, par une interruption locale de la nappe 2O pour former un passage aboutissant à l'air libre, la paroi étanche 25 s'étendant autour de ce passage de façon hermétique. On a représenté une telle réalisation sur le schéma 2a.

Pour le passage de la canule 26, on peut prévoir des reliefs ou dépressions dans la paroi 25 afin de faciliter l'amenée d'eau.

La paroi 25 au lieu d'être semi-rigide, peut également être constituée d'une membrane 1 perméable, du genre des opercules alimentaires, à travers laquelle on peut faire passer la canule.

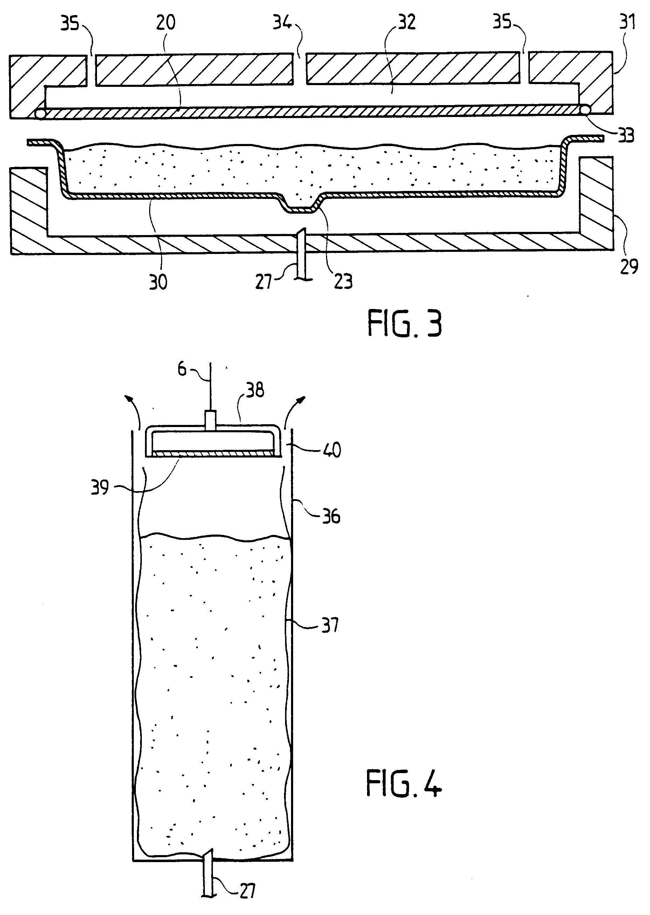

En se référant à la figure 3, on voit un exemple de réalisation dans lequel on utilise toujours une barquette mais celle-ci ne forme qu'un partie de l'enceinte. A cette fin, l'appareil comprend un support inférieur 29 dans lequel on peut loger une barquette 3O remplie de café en poudre après que l'on ait préalablement déposé l'opercule supérieur (non représenté) assurant la fermeture de la partie supérieure de la barquette. Un deuxième élément 31 présente une chambre 32 jouant le rôle du volume 21 et obturée à sa partie inférieure par la nappe poreuse 2O. Un joint périphérique 33 assure l'étanchéité lorsque, la barquette étant posé dans le support 29, ce qui provoque la perforation de son puits 23 par la canule 27, on vient appliquer la pièce 31 sur le support 29. On amène l'eau par un passage 34, relié au conduit 6, l'air étant évacué par des évents 35.

Enfin, dans une autre forme de réalisation, la machine prévoit une cuve cylindrique verticale 36 à l'intérieur de laquelle on peut disposer un sachet cylindrique de café 37 après l'avoir préalablement largement ouvert. Un dispositif 38 situé à la partie supérieure de la cuve présente une nappe poreuse 39, qui peut également être remplacée par une nappe perforée et est alimenté en eau par le conduit 6. L'eau qui est amenée dans le volume interne au dispositif 38, se répand alors en gouttelettes et tombe sur le café sous-jacent contenu dans le sachet 37 dont le fond a été perforé par une canule 27 reliée à la canalisation 15. On prévoit, dans ce cas, un large passage 4O de la partie supérieure pour une évacuation facile de l'air.

Afin d'assurer une descente homogène de l'eau, sur toute la surface, par exemple à travers une nappe poreuse telle que 2O, ou une membrane perforée, on peut prévoir d'établir une pression dans le volume au-dessus de la nappe, pour forcer l'eau à traverser la nappe de façon homogène. On peut à l'inverse, établir une dépression dans le volume contenant la poudre de café, par exemple dans le volume 22 de la barquette, par exemple au travers du passage d'évent (figure 2a). Dans ces réalisations, la nappe 2O est de préférence rigide, ou rigidifiée.

En se référent à la figure 1O, on voit un sachet de café soluble vertical allongé 41 d'un type courant dans le commerce. A sa partie supérieure a été fixée une capsule 42. Le sachet est introduit dans un bac 43 d'une machine de préparation de doses de café prêtes à la consommation et, en 44, on a représenté un tube plongeur pénétrant dans le sachet à travers une ouverture de la capsule 42 pour l'aspiration du concentré de café.

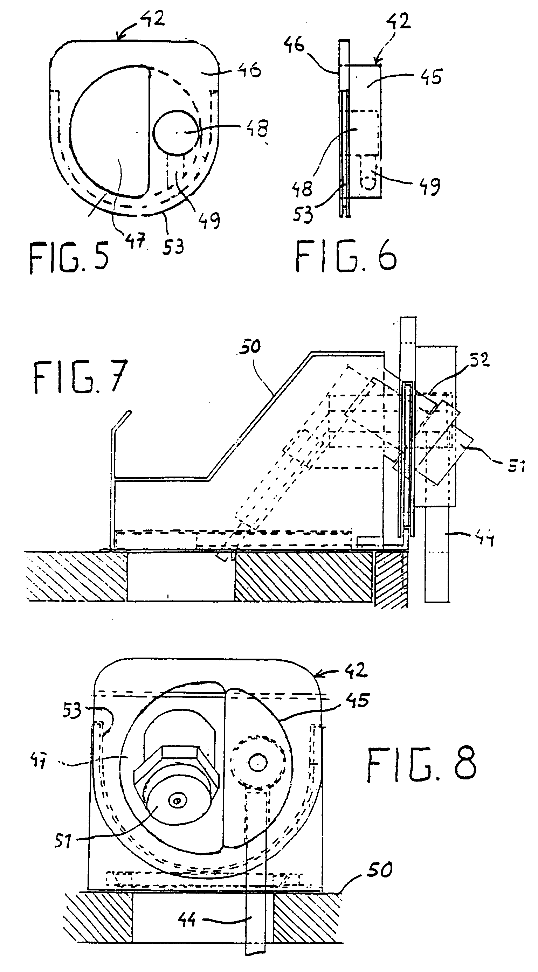

En se référant aux figures 5 et 6, on voit que cette capsule 42 présente avantageusement un corps cylindrique 45 de section sensiblement semi-circulaire dont l'une des bases se raccorde à un épaulement ou embase 46 dont la face opposée à celle vue sur la figure 5, permet le collage contre la paroi de sachet 41. L'embase 46 présente un passage central 47. Ce passage présente sensiblement une section en demi cercle. Le cylindre 45 est massif mais présente un trou borgne 48 ouvert du côté de l'embase 46 et fermé de l'autre côté du cylindre. Un deuxième trou transversal 49 relie le trou borgne 46 à la paroi latérale du cylindre.

Une partie de la périphérie de l'embase 46 présente une gorge périphérique 53 qui servira au positionnement et à la fixation sur la machine à café. Enfin, un opercule amovible non représenté, est fixé sur la face de l'embase apparente sur la figure 5 pour masquer de façon étanche les trous 47 et 48.

Avant d'apposer la capsule sur le sachet de café et de l'y fixer, par exemple, par collage, on a préalablement réalisé, dans le sachet, un trou assurant la communication de l'intérieur du sachet avec les deux passages 47 et 49.

Une fois que l'on a disposé le sachet 42 dans la cuve 43 de la machine, on vient appliquer la capsule 41 du sachet dont on a enlevé l'opercule, contre une tête 5O qui présente des moyens de maintien, non représentés, permettant d'immobiliser la capsule 41 dans la position verticale représentée, en coopérant avec la gorge 53. Dans cette position, une buse de pulvérisation d'eau 51 montée fixe dans la tête 5O, et faisant un angle de 45° avec la verticale, pénètre dans le passage 47. Cette buse 51 est reliée par un conduit non autrement décrit à une source d'alimentation en eau.

Dans le trou 49, on a, avant le collage de la capsule sur le sachet de café, introduit à force un tube flexible allongé 44 dont l'ouverture inférieure est situé vers le fond du sachet. Lorsque l'on a placé la capsule dans sa position sur la machine, un embout tubulaire 52 est venu pénétrer, de façon étanche, dans le passage 48, cet embout 52 étant relié, par une canalisation convenable, à un dispositif connu de mélange par aspiration grâce à un organe dépriogène tel que Venturi.

Le fonctionnement est le suivant. Le sachet étant ainsi placé avec la capsule contre la tête 5O, on introduit de l'eau par pulvérisation ou autre forme d'injection par la buse 51 à un débit suffisant pour qu'un volume d'eau s'accumule à la surface de la poudre de café. Ce volume d'eau va ensuite descendre en dissolvant progressivement les couches sous-jacentes de café qu'il rencontre et, pendant ce temps, on continue d'alimenter en eau jusqu'à pulvérisation de tout volume d'eau nécessaire pour le concentré. La descente du volume d'eau, dans lequel le café se concentre, au fur et à mesure, assure une parfaite dissolution de la poudre. Une fois la poudre dissoute, on peut aspirer le concentré le café par le tube 44, le passage dans la capsule, l'embout 52 et le dispositif d'aspiration et de mélange et l'on peut ainsi délivrer des doses de café.

## Revendications

1. Procédé de préparation automatique de doses ou de pluralité de doses d'une boisson telle que, notamment, le café, à partir de poudre soluble, dans lequel on réalise, dans une enceinte (8, 30, 37, 42) un concentré de boisson par dissolution de quantités déterminées de poudre et d'eau, puis l'on procède à une dilution d'une partie ou de la totalité du concentré dans de l'eau froide ou chaude pour réaliser une dose ou une pluralité de doses de boisson, caractérisé en ce que l'on dispose une quantité déterminée de poudre dans ladite enceinte (8, 30, 37, 42) in situ dans un dispositif de délivrance desdites doses de boisson, et que l'on amène une quantité déterminée d'eau dans ladite enceinte au-dessus de la surface du volume de poudre dans ladite enceinte, à un débit suffisant pour qu'un volume d'eau s'accumule sur la surface de la poudre, pour dissoudre ladite poudre dans ladite enceinte maintenue à pression ambiante, en autorisant l'évacuation de l'air pour former, dans ladite enceinte, ledit concentré liquide de boisson.

2. Procédé selon la revendication 1, caractérisé en ce qu'on réalise du concentré en dispersant de l'eau, d'une façon douce et homogène, sur la totalité de la surface supérieure d'un volume de poudre soluble.

3. Procédé selon la revendication 1, dans lequel la masse de poudre présente une hauteur verticale importante pour une surface plus faible, caractérisé en ce qu'on déverse directement, mais doucement, de l'eau sur la masse de café de façon à former une masse supérieure liquide qui descend progressivement en dissolvant sur son passage les couches successives de poudre rencontrées tandis que l'on complète au fur et à meure la quantité d'eau.

4. Procédé selon l'une des revendications 1 à 3, caractérisé en ce que l'on utilise, comme enceinte, un récipient ayant préalablement reçu ladite quantité de poudre et agencé pour la livraison de ladite poudre.

5. Procédé selon la revendication 4, caractérisée en ce que ledit récipient est un sachet de poudre.

6. Procédé selon la revendication 4, caractérisée en ce que la poudre de café est conditionnée sous forme de barquettes horizontales dans lesquelles on réalise le concentré.

7. Procédé selon l'une des revendications 1 à 6, caractérisé en ce que ledit concentré est conservé dans ledit récipient dans le dispositif de délivrance de doses.

8. Procédé selon l'une quelconque des revendications 1 à 7, caractérisé en ce que l'an procède à la dilution de la quantité souhaitée de concentré de boisson dans un liquide par aspiration par effet Venturi.

9. Procédé selon l'une des revendications 1 à 8, caractérisé en ce que l'on pulvérise l'eau au-dessus de la surface du volume de café.

10. Dispositif pour la mise en oeuvre du procédé selon l'une des revendications 1 à 9, caractérisé en ce qu'il comporte une enceinte de surface relativement importante (8, 24, 30), contenant ou recevant la boisson en poudre, des moyens d'aspersion, de pulvérisation, ou d'humidification homogène (20) distribuant de façon homogène et douce, du liquide sur la totalité de la surface supérieure de l'enceinte, et des passages d'évacuation d'air contenue dans l'enceinte.

11. Dispositif selon la revendication 10, caractérisé en ce que ladite enceinte est constituée d'un récipient en forme de barquette (24, 3O) dans lequel le café en poudre est conditionné, le dispositif présentant des moyens pour amener l'eau sur la surface du café contenu dans la barquette.

12. Dispositif selon la revendication 11, caractérisé en ce que la barquette est refermée, à sa face supérieure, par un double opercule présentant une nappe inférieure perméable ou poreuse (2O) et une nappe supérieure, étanche (25), le dispositif comportant des moyens (26) agencés pour pénétrer dans un espace situé entre les deux nappes du double opercule et distribuer de l'eau de façon homogène dans cet espace, l'eau s'écoulant ensuite régulièrement vers le bas à travers la nappe poreuse pour humidifier et dissoudre progressivement le café en poudre.

13. Dispositif pour la mise en oeuvre du procédé selon l'une quelconque des revendications 1 5, 7 ou 8, caractérisé en ce que ladite enceinte est un sachet de poudre (37, 42) et en ce que le dispositif comporte des moyens d'aspersion, de pulvérisation, ou d'humidification homogène (38, 51), distribuant de façon homogène et douce, du liquide sur la totalité de la surface supérieure du volume de poudre dans ledit sachet, lesdits moyens d'aspersion, de pulvérisation ou d'humidification homogène étant agencés pour autoriser une évacuation d'air contenu dans le sachet.

14. Dispositif selon la revendication 13, caractérisé en ce qu'il comporte un récipient ou cuve (36, 43) susceptible de contenir ledit sachet (37,42).

15. Dispositif selon l'une des revendications 13 et 14, caractérisé en ce que lesdits premiers moyens (38, 51) permettent l'arrivée de liquide par une ouverture pratiquée dans la partie supérieure du sachet.

16. Dispositif selon l'une des revendications 9 à 15, caractérisé en ce que lesdits premiers moyens comportent une pluralité de perforations homogènes s'étendant sur toute la surface au-dessus de la poudre de café.

17. Dispositif selon l'une des revendications 9 à 15, caractérisé en ce que lesdits premiers moyens comportent des moyens de pulvérisation homogène de liquide sur toute la surface au-dessus de la poudre de café.

18. Dispositif selon l'une des revendications 9 ou 13 à 17, caractérisé en ce qu'il comporte une tête (5O) munie d'un moyen de délivrance d'eau, telle qu'une buse (51), et de moyens permettant de fixer une capsule portée par un sachet de café pour que la buse pénètre dans le sachet par un passage dans la capsule.

19. Dispositif selon la revendication 18, caractérisé en ce que ladite tête présente, en outre, un embout (52) pour l'aspiration du concentré de café.

20. Dispositif selon l'une quelconque des revendications 11 et 12, caractérisé en ce que le prélèvement du concentré s'effectue par la partie inférieure de la barquette, par pénétration d'une aiguille d'évacuation 27 dans un puits de collecte situé à la partie inférieure de la barquette.

21. Dispositif selon l'une quelconque des revendications 9 à 20, caractérisé en ce que lesdits seconds moyens comportent une chambre d'aspiration par effet Venturi (14) reliée à une source de liquide, une canalisation d'aspiration (15) reliant le concentré de café à ladite chambre d'aspiration (14), laquelle débouche sur une canalisation de distribution.

22. Dispositif selon la revendication 21, caractérisé par un clapet anti-retour (16) situé sur la canalisation d'aspiration (15).

23. Dispositif selon l'une des revendications 21 et 22, caractérisé en ce que ladite canalisation (15) est disposée sous les moyens (3, 3O, 35) réalisant le concentré.

24. Barquette de poudre de boisson soluble pour la mise en oeuvre du procédé selon la revendication 6, formant un récipient dont le fond est dépouvu de moyens de filtration et présentant, à sa face supérieure, des moyens (20) permettant de disperser de l'eau, de façon douce et homogène sur la totalité de la surface supérieure du volume de poudre dans la barquette.

25. Barquette selon la revendication 24, caractérisé par un double opercule, à avoir une nappe perméable ou poreuse (2O) et une nappe supérieure étanche pour former un volume inférieur contenant la poudre, et un volume supérieure dans lequel on amène le liquide pour former le concentré.

26. Barquette selon l'une des revendications 24 et 25, caractérisée par un puits de recueil inférieur perforable.

27. Sachet imperméable de café en poudre destiné à permettre la réalisation d'un concentré de café par l'introduction d'eau dans le sachet, puis la distribution du concentré dans un dispositif pour la délivrance de doses de café dilué à partir du concentré par le procedé selon la revendication 5, caractérise en ce qu'il est Formé d'une paroi étanche dépourvue de Filtre et qu'il porte, vers sa face supérieure, une capsule (42), comportant au moins un passage (47) permettant l'introduction d'un moyen d'amenée d'eau, tout en autorisant le passage de l'air.

28. Sachet selon la revendication 27, caractérisé en ce que ladite capsule présente une embase (46) située à une extrémité d'une partie cylindrique (45) munie d'au moins un passage (47).

29. Sachet selon la revendication 28, caractérisé en ce que ladite capsule comporte un deuxième passage (48) coopérant avec un tube plongeur (44) pour l'aspiration du concentré de café.

30. Sachet selon la revendication 29, caractérisé en ce que ledit second passage est réalisé sous la forme d'une passage borgne (48), dans lequel débouche un passage transversal (49) aboutissant à la surface extérieure du cylindre et recevant une extrémité dudit tube plongeur (44) tandis que ledit passage borgne (48) est susceptible de recevoir un embout tubulaire (52) d'un dispositif pour l'aspiration du concentré de café.

## Claims

1. Method for the automatic preparation of doses or a plurality of doses of a drink such as, in particular, coffee, from a soluble powder, in which a drink concentrate is produced in an enclosure (8, 30, 37, 42) by dissolving predetermined quantities of powder in water, then one proceeds with a dilution of part or all of the concentrate in cold or hot water in order to produce a dose or a plurality of doses of drink, characterized in that there is a predetermined quantity of powder in said enclosure (8, 30, 37, 42) in situ in a device for dispensing said doses of drink, and that a predetermined quantity of water is supplied to said enclosure above the surface of the volume of powder in said enclosure, at a sufficient rate of flow in order that a volume of water accumulates on the surface of the powder, in order to dissolve said powder in said enclosure kept at ambient pressure, by allowing the escape of air in order to form, in said enclosure, said liquid drink concentrate.

2. Method according to Claim 1, characterised in that the concentrate is produced by dispersing water, gently and homogeneously, over the entire upper surface of a volume of soluble powder.

3. Method according to Claim 1, in which the mass of powder has a considerable vertical height for a smaller surface, characterised in that water is poured directly, but gently, onto the mass of coffee in order to form a liquid upper mass which descends progressively thus dissolving, as it passes, the successive layers of powder encountered, whereas the quantity of water is completed in proportion.

4. Method according to one of Claims 1 to 3, characterised in that one uses, as the enclosure, a container which has previously received laid quantity of powder and is arranged for the delivery of said powder.

5. Method according to Claim 4, characterised in that said container is a sachet of powder.

6. Method according to Claim 4, characterised in that the coffee powder is packed in the form of horizontal trays in which the concentrate is produced.

7. Method according to one of Claims 1 to 6, characterised in that said concentrate is kept in said container in the device for delivering doses.

8. Method according to one of Claims 1 to 7, characterized in that one proceeds with the dilution of the desired quantity of drink concentrate in a liquid by suction by the venturi effect.

9. Method according to one of Claims 1 to 8, characterised in that water is sprayed above the surface of the volume of coffee.

10. Device for carrying out the method according to one of Claims 1 to 9, characterized in that it comprises an enclosure having a relatively large surface (8, 24, 30), containing or receiving the drink powder, sprinkling means, spray means or means (20) for homogeneous moistening, distributing homogeneously and gently liquid onto the entire upper surface of the enclosure, and passages for the discharge of air contained in the enclosure.

11. Device according to Claim 10, characterized in that said enclosure is constituted by a container in the form of a tray (24, 30) in which the coffee powder is packed, the device comprising means for supplying water to the surface of the coffee contained in the tray.

12. Device according to Claim 11, characterised in that the tray is closed, on its upper side, by a double cover comprising a permeable or porous lower sheet (20) and an upper sealed sheet (25), the device comprising means (26) arranged to penetrate a space situated between the two sheets of the double cover and to distribute water homogeneously to this space, the water then flowing uniformly downwards through the porous sheet in order to moisten and progressively dissolve the coffee powder.

13. Device for carrying out the method according to one of Claims 1, 5, 7 or 8, characterised in that said enclosure is a sachet of powder (37, 42) and in that the device comprises means for sprinkling, spraying or homogeneous moistening (38, 51), distributing homogeneously and gently liquid onto the entire upper surface of the volume of powder in said sachet, said means for sprinkling, spraying or homogeneous moistening being arranged in order to allow an escape of the air contained in the sachet.

14. Device according to Claim 13, characterized in that it comprises a container or tank (36, 43) able to contain said sachet (37, 42).

15. Device according to one of Claims 13 and 14, characterised in that said first means (38, 51) allow the inlet of liquid through an opening provided in the upper part of the sachet.

16. Device according to one of Claims 9 to 15, characterised in that said first means comprise a plurality of homogeneous perforations extending over the entire surface above the coffee powder.

17. Device according to one of Claims 9 to 15, characterized in that said first means comprise means for the homogeneous spraying of liquid onto the entire surface above the coffee powder.

18. Device according to one of Claims 9 or 13 to 17, characterized in that it comprises a head (50) provided with means for the supply of water, such as a nozzle (51), and means making it possible to fix a capsule carried by a sachet of coffee in order that the nozzle penetrates the sachet through a passage in the capsule.

19. Device according to Claim 18, characterized in that said head furthermore comprises a mouth-piece (52) for sucking-in the coffee concentrate.

20. Device according to one of claims 11 and 12, characterised in that the removal of the concentrate takes place through the lower part of the tray, by the penetration of a discharge needle (27) into a collecting recess situated in the lower part of the tray.

21. Device according to one of Claims 9 to 20, characterised in that said second means comprise a suction chamber (14) using the venturi effect, connected to a source of liquid, a suction line (15) connecting the coffee concentrate to said suction cheer (14), which opens into a distribution line.

22. Device according to Claim 21, characterised by a non-return valve (16) situated in the suction line (15).

23. Device according to one of Claims 21 and 22, characterised in that said line (15) is disposed below the means (8, 30, 35) producing the concentrate.

24. Tray of soluble drink powder for carrying out the method according to Claim 6, forming a container whereof the base is devoid of filtration means and comprising, on its upper side, means (20) making it possible to spread water, gently and homogeneously over the entire upper surface of the volume of powder in the tray.

25. Tray according to claim 24, characterised by a double cover, namely a permeable or porous sheet (20) and an upper sealed sheet in order to form a lower volume containing powder, and an upper volume to which the liquid is supplied in order to form the concentrate.

26. Tray according to one of claims 24 and 25, characterised by a lower collection recess, which can be perforated.

27. Impermeable sachet of coffee powder intended to allow the production of a coffee concentrate by the introduction of water into the sachet, then the distribution of the concentrate to a device for delivering doses of coffee diluted from the concentrate by the method according to Claim 5, characterised in that it is formed by a sealed wall devoid of filter and that it carries, towards its upper side, a capsule (42), comprising at least one passage (47) allowing the introduction of means for supplying water, whilst allowing the passage of air.

28. Sachet according to Claim 27, characterized in that said capsule comprises a base (46) situated at one end of a cylindrical part (45) provided with at least one passage (47).

29. Sachet according to Claim 28, characterised in that said capsule comprises a second passage (48) cooperating with a plunger tube (44) for sucking up the coffee concentrate.

30. Sachet according to Claim 29, characterised in that said second passage is made in the form of a blind passage (48), into which opens a transverse passage (49) leading to the outer surface of the cylinder and receiving one end of laid plunger tube (44), whereas said blind passage (48) is able to receive a tubular mouth-piece (52) of a device for sucking up coffee concentrate.

## Patentansprüche

1. Verfahren zur automatischen Zubereitung von Portionen oder einer Mehrzahl von Portionen eines Getränks, wie beispielsweise insbesondere Kaffee, aus einem löslichen Pulver, bei dem in einem Behälter (8, 30, 37, 42) ein Getränkekonzentrat durch Auflösung von bestimmten Mengen von Pulver und Wasser hergestellt wird, sodann eine Verdünnung eines Teils oder der Gesamtheit des Konzentrats mit kaltem oder heißem Wasser durchgeführt wird, um eine Portion oder eine Mehrzahl von Getränkeportionen herzustellen, dadurch gekennzeichnet, daß eine bestimmte Menge Pulver in dem Behälter (8, 30, 37, 42) in einem Spender für diese Getränkeportionen angeordnet wird und daß eine bestimmte Menge Wasser in dem Behälter über der Fläche des Pulvervolumens in diesem Behälter in ausreichender Menge angeordnet wird, daß sich ein Wasservolumen auf der Oberfläche des Pulvers anhäuft, um das Pulver in dem Behälter, der unter Umgebungsdruck gehalten wird, aufzulösen, wobei die Luft abgelassen werden kann, um in dem Behälter das flüssige Getrankekonzentrat zu bilden.

2. Verfahren nach Anspruch 1, dadurch gekennzeichnet, daß ein Konzentrat hergestellt wird, indem Wasser auf sanfte und gleichmäßige Art auf der gesamten Oberfläche eines Volumens eines löslichen Pulvers verteilt wird.

3. Verfahren nach Anspruch 1, bei dem die Pulvermasse eine große vertikale Höhe bei einer geringeren Oberfläche aufweist, dadurch gekennzeichnet, daß direkt, aber sanft, Wasser auf die Kaffeemasse geleert wird, um eine obere flüssige Masse zu bilden, die sich nach und nach absenkt, indem sie bei ihrem Durchsickern die aufeinanderfolgenden Schichten von Pulver, auf die sie trifft, auflöst, während die Wassermenge entsprechend ergänzt wird.

4. Verfahren nach einem der Ansprüche 1 bis 3, dadurch gekennzeichnet, daß als Behälter ein Gefäß verwendet wird, in das vorher die Pulvermenge eingefüllt wurde und das für die Zuführung dieses Pulvers angeordnet wird.

5. Verfahren nach Anspruch 4, dadurch gekennzeichnet, daß das Gefäß ein Säckchen mit Pulver ist.

6. Verfahren nach Anspruch 4, dadurch gekennzeichnet, daß das Kaffeepulver in Form von horizontalen länglichen Behältern verpackt ist, in denen das Konzentrat hergestellt wird.

7. Verfahren nach einem der Ansprüche 1 bis 6, dadurch gekennzeichnet, daß das Konzentrat in dem Behälter in dem Spender für die Portionen aufbewahrt wird.

8. Verfahren nach einem der Ansprüche 1 bis 7, dadurch gekennzeichnet, daß die Auflösung der gewünschten Menge an Getränkekonzentrat in einer Flüssigkeit durch Ansaugen durch den Venturi-Effekt erfolgt.

9. Verfahren nach einem der Ansprüche 1 bis 8, dadurch gekennzeichnet, daß das Wasser über der Oberfläche des Kaffeevolumens zerstäubt wird.

10. Vorrichtung für den Einsatz dem Verfahrens nach einem der Ansprüche 1 bis 9, dadurch gekennzeichnet, daß sie einen Behälter mit relativ großer Oberfläche (8, 24, 30), der das Getränk in Pulverform enthält oder aufnimmt, Mittel zur Besprengung, Zerstaubung oder gleichmäßigen Befeuchtung (20), die Flüssigkeit gleichmäßig und sanft auf der gesamten Oberfläche des Behälters verteilen, und Durchgänge für die Ableitung der in dem Behälter enthaltenen Luft umfaßt.

11. Vorrichtung nach Anspruch 10, dadurch gekennzeichnet, daß der Behälter von einem Gefäß in Form eines länglichen Behälters (24, 30) gebildet wird, in dem der pulverförmige Kaffee verpackt ist, wobei die Vorrichtung Mittel zur Zuführung des Wassers auf die Oberfläche des in dem länglichen Behälter enthaltenen Kaffees umfaßt.

12. Vorrichtung nach Anspruch 11, dadurch gekennzeichnet, daß der längliche Behälter an seiner Oberseite durch einen doppelten Deckel verschlossen ist, der eine durchlässige oder poröse untere Schicht (20) und eine dichte obere Schicht (25) aufweist, wobei die Vorrichtung Mittel (26) umfaßt, die derart angeordnet sind, daß sie in einen Raum eindringen, der sich zwischen den beiden Schichten des doppelten Deckels befindet, und Wasser gleichmäßig in diesem Raum verteilen, wobei das Wasser sodann gleichmäßig nach unten über die poröse Schicht abfließt, um nach und nach den pulverförmigen Kaffee zu befeuchten und aufzulösen.

13. Vorrichtung für den Einsatz des Verfahrens nach einem der Ansprüche 1, 5, 7 oder 8, dadurch gekennzeichnet, daß der Behälter ein Säckchen mit Pulver (37, 42) ist, und daß die Vorrichtung Mittel zur Besprengung, Zerstäubung oder gleichmäßigen Befeuchtung (38, 51) umfaßt, die Flüssigkeit auf der gesamten Oberfläche des Pulvervolumens in diesem Säckchen gleichmäßig und sanft verteilen, wobei die Mittel zur Besprengung, Zerstäubung oder gleichmäßigen Befeuchtung derart angeordnet sind, daß sie eine Ableitung der in dem Säckchen enthaltenen Luft ermöglichen.

14. Vorrichtung nach Anspruch 13, dadurch gekennzeichnet, daß sie einen Behälter oder eine Wanne (38, 43) umfaßt, die das Säckchen (37, 42) enthalten können.

15. Vorrichtung nach einem der Ansprüche 13 und 14, dadurch gekennzeichnet, daß die ersten Mittel (38, 51) die Zuführung von Flüssigkeit durch eine in dem oberen Teil des Säckchens vorgesehene Öffnung ermöglichen.

16. Vorrichtung nach einem der Ansprüche 9 bis 15, dadurch gekennzeichnet, daß die ersten Mittel eine Mehrzahl von gleichmäßigen Perforationen umfassen, die sich auf der gesamten Fläche über dem Kaffeepulver erstrecken.

17. Vorrichtung nach einem der Ansprüche 9 bis 15, dadurch gekennzeichnet, daß die ersten Mittel Mittel zur gleichmäßigen Zerstäubung von Flüssigkeit auf der gesamten Flache über dem Kaffeepulver umfassen.

18. Vorrichtung nach einem der Ansprüche 9 oder 13 bis 17, dadurch gekennzeichnet, daß sie einen Kopf (50) umfaßt, der mit einem Wasserspender, wie beispielsweise einer Düse (51), und mit Mitteln versehen ist, die es ermöglichen, eine Kapsel, die von einem Kaffeesäckchen getragen wird, zu befestigen, damit die Düse in das Säckchen durch einen Durchgang in der Kapsel eindringt.

19. Vorrichtung nach Anspruch 18, dadurch gekennzeichnet, daß der Kopf ferner einen Ansatz (52) für das Ansaugen des Kaffeekonzentrats aufweist.

20. Vorrichtung nach einem der Ansprüche 11 und 12, dadurch gekennzeichnet, daß die Entnahme des Konzentrats durch den unteren Teil des länglichen Behälters durch Eindringen einer Entnahmenadel (27) in ein Sammelbecken, das am unteren Teil des länglichen Behälters angeordnet ist, erfolgt.

21. Vorrichtung nach einem der Ansprüche 9 bis 20, dadurch gekennzeichnet, daß die zweiten Mittel eine Kammer zur Ansaugung durch Venturi-Effekt (14) umfassen, die mit einer Flüssigkeitsquelle verbunden ist, wobei ein Ansaugkanal (15) das Kaffeekonzentrat mit der Ansaugkammer (14) verbindet, welche in einen Verteilerkanal mündet,

22. Vorrichtung nach Anspruch 21, gekennzeichnet durch eine Rücklaufklappe (16), die an dem Ansaugkanal (15) angeordnet ist.

23. Vorrichtung nach einem der Ansprüche 21 und 22, dadurch gekennzeichnet, daß der Kanal (15) unter den Mitteln (8, 30, 35), die das Konzentrat herstellen, angeordnet ist.

24. Länglicher Behälter mit löslichem Getränkepulver für den Einsatz des Verfahrens nach Anspruch 6, welcher ein Gefäß bildet, dessen Boden keine Filtermittel aufweist, und welcher an seiner Oberseite Mittel (20) besitzt, die es ermöglichen, Wasser sanft und gleichmäßig auf der gesamten Oberfläche des Pulvervolumens in dem länglichen Behälter zu verteilen.

25. Länglicher Behälter nach Anspruch 24, gekennzeichnet durch einen doppelten Deckel, welcher eine durchlässige oder poröse Schicht (20) und eine dichte obere Schicht aufweist, um ein unteres Volumen, das das Pulver enthält, und ein oberes Volumen zu bilden, in das die Flüssigkeit zur Bildung des Konzentrats eingeleitet wird.

26. Länglicher Behälter nach einem der Ansprüche 24 und 25, gekennzeichnet durch ein perforierbares unteres Sammelbecken.

27. Undurchlässiges Säckchen mit pulverförmigem Kaffee, das dazu bestimmt ist, die Herstellung eines Kaffeekonzentrats durch die Einleitung von Wasser in das Säckchen, sodann die Verteilung des Konzentrats in einer Vorrichtung zum Spenden von Portionen von aus dem Konzentrat durch das Verfahren nach Anspruch 5 gelostem Kaffee zu ermöglichen, dadurch gekennzeichnet, daß es von einer dichten, filterlosen Wandung gebildet wird und zu seiner Oberseite hin eine Kapsel (42) umfaßt, die mindestens einen Durchgang (47) aufweist, der die Einführung eines Mittels zur Wasserzuführung und gleichzeitig den Durchgang der Luft ermöglicht.

28. Sackchen nach Anspruch 27, dadurch gekennzeichnet, daß die Kapsel einen Sockel (46) aufweist, der an einem Ende eines zylindrischen Teils (48), der mit mindestens einem Durchgang (47) versehen ist, angeordnet ist.

29. Säckchen nach Anspruch 28, dadurch gekennzeichnet, daß die Kapsel einen zweiten Durchgang (48) umfaßt, der mit einem Tauchrohr (44) für die Ansaugung des Kaffeekonzentrats zusammenwirkt.

30. Säckchen nach Anspruch 29, dadurch gekennzeichnet, daß der zweite Durchgang in Form eines Blinddurchganges (48) ausgeführt ist, in den ein Querdurchgang (49) mündet, der an der Außenseite des Zylinders endet und ein Ende des Tauchrohres (44) aufnimmt, während der Blinddurchgang (48) einen röhrenförmigen Ansatz (52) einer Vorrichtung zur Ansaugung des Kaffeekonzentrats aufnehmen kann.
